# EUROPEAN PATENT APPLICATION

(11) **EP 2 065 340 A1**
(43) Date of publication of application: **03.06.2009**
(21) Application number: 08170183.1
(22) Date of filing: 28.11.2008
(51) Int. Cl.: C01B 31/02, B01J 13/02, H01M 4/88

(54) **Porous material having a hollow capsule structure and method of preparing the same**

(30) Priority: 28.11.2007 KR 20070122150
(71) Applicant: Samsung SDI Co., Ltd., Suwon-si Gyeonggi-do (KR)
(72) Inventor: Kang, Soon-Ki, Gyeonggi-do (KR); Kwak, Chan, Gyeonggi-do (KR); Min, Myoung-Ki, Gyeonggi-do (KR); Chai, Geun-Seok, Gyeonggi-do (KR)
(74) Representative: Hengelhaupt, Jürgen

(57) **Abstract**

The present invention relates to a porous material having a hollow capsule structure and a method of preparing the same. More particularly, the present invention relates to porous material that has good electronic conductivity and a large specific surface area and that easily performs mass transfer, and a method of preparing the same. According to one aspect of the invention there is provided a porous material having a hollow capsule structure comprising a shell, which has nanopores therein and encircles a central hollow space.

## Description

### BACKGROUND OF THE INVENTION

### 1. Field of the Invention

The present invention relates to a porous material, especially porous carbon material, having a hollow capsule structure and a method of preparing the same. More particularly, the present invention relates to material, especially carbon material, that has good electronic conductivity and a large specific surface area and that easily performs mass transfer, and a method of preparing the same. The invention further refers to a fuel cell catalyst and a membrane-electrode assembly for a fuel cell including the carbon material.

### 2. Description of the Related Technology

In general, a porous material can be applied to a catalyst carrier, a separation system, a low dielectric constant material, a hydrogen storage material, photonics crystal, and the like. The porous material may include an inorganic material, a metal, a polymer or carbon. The carbon material has excellent chemical and mechanical characteristics and thermal stability, and thus can be usefully applied to various areas. In particular, a porous carbon material of various kinds and shapes may be widely used in fuel cells because it has excellent surface, ion conductivity, and anti-corrosion characteristics as well as a low cost. For example, the porous carbon material may include activated carbon and carbon black used as a catalyst carrier. Currently, carbon black or Vulcan XC-72 is used as a carrier for an electrode catalyst of a fuel cell and one commercially-available E-TCK catalyst is a Pt-Ru alloy catalyst supported by the Vulcan XC-72.

Recently, other types of carbon materials, for example, meso-structured carbon, graphitic carbon nanofiber, and mesocarbon microbeads, have been widely used as catalyst supporters to enhance activity of a metal catalyst. It is still difficult, however, to synthesize a porous carbon material with a large specific surface area and a mutually-connected structure.

Recently, a template has been used in one of the most popular methods of synthesizing a porous carbon material with a regularly-arranged structure by using zeolite, a mesoporous material and colloidal crystal. According to this synthesis method, a porous carbon material is prepared by injecting a carbon precursor into a porous silica mold, carbonizing the carbon precursor under a non-oxidation condition and dissolving the silica mold in a HF or NaOH solution. Although this method may succeed in producing a carbon material with a single pore size, it has a limit in increasing its specific surface area. Thus, additional research has been required to achieve a porous carbon material with both a larger specific surface area and a mutually-connected structure.

### SUMMARY OF CERTAIN INVENTIVE ASPECTS

It is one aspect of the present invention to provide a porous material, especially a porous carbon material, having good electrical conductivity and a large specific surface area. In particular, the porous carbon material should be configured to perform mass transfer in fuel cells.

According to one aspect of the invention there is provided a porous material, especially porous carbon material, having a hollow capsule structure comprising a shell, which has nanopores therein and encircles a central hollow space.

Preferably, the nanopores and the central hollow spaceare of spherical shape.

Preferably, a nanopore diameter ranges from 5nm to 100nm. In particular, the hollow space within the hollow capsule structure has a diameter ranging from 100nm to 5µm and a ratio of the nanopore diameter and the hollow space diameter is from 1:3 to 1:100.

The porous material may have a specific surface area ranging from 500m²/g to 2000m²/g.

The nanopores within the hollow capsule structure preferably have a single pore size.

Preferably, the shell has a multi-layered structure.

According to another aspect of the present invention there is provided a method of preparing a porous material having a hollow capsule structure comprising a shell, which has nanopores therein and encircles a central hollow space. The method comprises the steps of:
a) providing macro-sized particles having a diameter corresponding to a diameter of the hollow space to be achieved;
b) absorbing a cationic polymer in the macro-sized particles;
c) providing nano-sized particles having a diameter corresponding to a diameter of the nanopores to be achieved;
d) mixing the nano-sized particles with the treated macro-sized particles of step b) and thereby attaching a plurality of nano-sized particles on the surface of the treated macro-sized particles;
e) optionally, repeating steps b) through d) one or more times to produce a multi-layered structure of attached nano-sized particles;
f) removing the cationic polymer from the intermediate provided by steps d) or e) by heat-treatment; and
g) absorbing a precursor material on the surface of the intermediate of step f).

The macro-sized and nano-sized particles are preferably of spherical shape. Further, a diameter of the nano-sized particles ranges from 5nm to 100nm. The macro-sized particles preferably have a diameter ranging from 100nm to 5µm and a ratio of diameters of the nano-sized particles and the diameter of the macro-sized particles is preferably from 1:3 to 1:100. The nano-sized particles may have a single diameter.

Preferably, the macro-sized and nano-sized particles are made of an inorganic oxide, especially of SiO₂.

The cationic polymer is preferably one obtained by polymerization of one or more monomers selected from the group consisting of diallyldialkylammonium halide, acryloxy alkylammonium halide, methacryloxy alkylammonium halide, vinyl aryl alkylammonium halide and 3-acrylamido-3-alkyl ammonium halide.

The heat-treatment of step f) is preferably performed at a temperature ranging from 450 to 700°C.

In particular, there is provided a method of preparing a porous carbon material having a hollow capsule structure comprising a shell, which has nanopores therein and encircles a central hollow space. The method comprises the steps of:
a) providing macro-sized particles having a diameter corresponding to a diameter of the hollow space to be achieved;
b) absorbing a cationic polymer in the macro-sized particles;
c) providing nano-sized particles having a diameter corresponding to a diameter of the nanopores to be achieved;
d) mixing the nano-sized particles with the treated macro-sized particles of step b) and thereby attaching a plurality of nano-sized particles on the surface of the treated macro-sized particles;
e) optionally, repeating steps b) through d) one or more times to produce a multi-layered structure of attached nano-sized particles;
f) removing the cationic polymer from the intermediate provided by steps d) or e) by heat-treatment;
g) absorbing a carbon precursor material on the surface of the intermediate of step f);
h) carbonizing the carbon precursor material by heat-treatment or performing a carbon deposition induced by the carbon precursor; and
i) dissolving the macro-sized and nano-sized particles by use of an etchant.

Preferably, the carbon precursor material, is coal tar pitch, petroleum pitch or an organic polymer capable of forming carbon through a carbonization reaction.

Step h) of carbonizing is preferably performed at a temperature ranging from 700 to 3.000°C.

Step i) of dissolving the macro-sized and nano-sized particles is preferably performed by etching with HF as an etchant.

Preferably, the method further includes a step j) of graphitization of the treated material of step i) at a temperature ranging from 2.300 to 3.000°C.

Another aspect of the invention refers to a porous material, especially porous carbon material, obtained or obtainable by the before mentioned method.

A further aspect of the invention is to provide a fuel cell catalyst comprising the before mentioned porous carbon material; and an active material disposed on the porous carbon material.

Another aspect of the invention is to provide a membrane-electrode assembly for a fuel cell comprising an anode; a cathode; a polymer electrolyte membrane positioned between the anode and the cathode; and a fuel cell catalyst of claim 21 disposed within the anode and/or the cathode.

Finally, another aspect of the invention refers to the use of the before mentioned porous material, especially porous carbon material, as a catalyst supporter, a supporter for carbon nanotube growth, an active material, a conductive agent, a separator, a deodorizer, a purifier, an adsorption agent, a material for a display emitter layer, and a filter material.

### BRIEF DESCRIPTION OF THE DRAWINGS

FIG. 1 is a flowchart showing a process of preparing a hollow capsule structure according to one embodiment of the present disclosure.
FIG. 2A shows a photograph of a nano-capsule structure template including macro-sized silica and a nano-sized silica layer formed thereon according to Example 1.
FIG. 2B shows a photograph of a hollow nano-capsule structure template including macro-sized silica and two nano-sized silica layers formed thereon according to Example 2.
FIG. 2C shows a photograph of a hollow nano-capsule structure template including macro-sized silica and three nano-sized silica layers formed thereon according to Example 3.
FIG. 3A shows a photograph of a hollow capsule structure according to Example 3 taken with a transmission electronic microscope.
FIG. 3B shows a photograph of a hollow capsule structure according to Example 3 taken with a transmission electronic microscope.
FIG. 3C shows a photograph of a hollow capsule structure according to Example 3 taken with a transmission electronic microscope.
FIG. 3D shows a photograph of a hollow capsule structure according to Example 3 taken with a transmission electronic microscope.
FIG. 3E shows a photograph of a hollow capsule structure according to Example 3 taken with a transmission electronic microscope.
FIG. 3F shows a photograph of a hollow capsule structure according to Example 3 taken with a transmission electronic microscope.
FIG. 4 is a graph showing catalyst activities of Comparative Examples 2 and 3.

### DETAILED DESCRIPTION OF CERTAIN INVENTIVE EMBODIMENTS

In this specification, "a porous material" is defined as a material with pores. Herein, "a micropore" has a micropore diameter of less than 2nm, "a macropore" has a macropore diameter of more than 100nm, and "a nanopore" (or mesopore) has a nanopore diameter ranging from 2nm to 100nm.

Recently, there has been research on various synthesis methods of porous carbon materials. For example, a new method of synthesizing a macro-porous carbon material with a regular and uniform size includes injecting a precursor such as a carbohydrate or a polymer monomer into a spherical colloid crystal mold laminated with silica particles for polymerization and carbonization, and then melting the mold for removal. See, for example, A. A. Zajhidov, R. H. Baughman, Z. Iqubal, C. Cui, I. Khayrullin, S. O. Dantas, J. Matri and V. G. Ralchenko, Science 1998, 282, 897; J.-S. Yu, S. B. Yoon and G. S. Chai, Carbon 2001, 39 9, 1442-1446; J.-S. Yu, S. J. Lee and S. B. Yoon, Mol. Cryst. Liq. Cryst., 2001, 371, 107-110, each of which his hereby incorporated by reference in its entirety. However, the porous carbon material prepared according to the above method did not have a uniform mesopore in the shell or wall. In addition, when prepared as a double porous material including a uniform channel-shaped pore in the shell with a hollow space inside itself, the shell pore may have a size of 10nm less. The shell pore may also limit the apparatus both for mass transfer and as a supporter.

Therefore, the present disclosure provides a hollow capsule structure. The hollow capsule structure is fabricated using template particles including macro-sized particles and nano-sized particles formed as single, double or multi-layer layers thereon. This method has an advantage of easily controlling a surface area of the hollow capsule structure. In addition, when the hollow capsule structure is fabricated using in this method, the hollow capsule structure may have both excellent conductivity and a large specific surface area. With both excellent conductivity and a large specific surface area the hollow capsule structure may be used together with a fuel cell catalyst supporter, an active material or a conductive agent for a lithium secondary battery, a separator, a deodorizer, a purifier, an adsorption agent, a material for a display emitter layer, a filter and the like.

According to one aspect a hollow capsule structure includes a shell including spherical nanopores. The hollow capsule structure includes a hollow space with a macro-size diameter in its center. In some embodiments the macro-size diameter ranges from 100nm to 5µm. The diameter may preferably be in a range of 300nm to 2µm. When a hollow capsule structure has a diameter within the above size range, it is easy to attach nano-sized particles on the surface of a macro-sized particle.

The nanopores in the shell und or the hollow space may have a spherical shape. When the hollow capsule structure is used as a supporter, the spherical nanopores can be more easily supported than linear nanopores and can thereafter efficiently perform mass transfer after being supported.

The nanopores may have a pore diameter ranging from 5 to 100nm. Preferably, they may have a pore diameter ranging from 10 to 100nm, but most preferred they may have a pore diameter ranging from 15 to 100nm, especially from 20 to 100nm. When the pores have a diameter within the above range, the pores may not be clogged and can easily transfer mass due to a capillary phenomenon. In addition, the nanopore in the shell and the hollow space may have a ratio ranging from 1:1 to 1:200. They may preferably have a ratio ranging from 1:3 to 1:100. When they have one of the above ratios, a plurality of spherical nanopores are easily formed.

The shell including the nanopores can be a single layer or multi-layers. When the shell is formed as multi-layers, it may preferably have 2 to 5 layers, especially 2 to 4 layers. When it has more than 5 layers, the capsule may have an inappropriate network. When a hollow capsule structure includes the hollow space and the nanopores, it has a large specific surface area and thereby excellent adsorption and detachment effects. In particular, the hollow capsule structure may preferably have a specific surface area ranging from 500m²/g to 2000m²/g. More preferred, it may have a specific surface area ranging from 700m²/g to 1800m²/g.

The hollow space is mutually connected with the nanopores in the shell, forming a three dimensional network and thereby providing excellent electronic conductivity. The nanopores include a void with a pore diameter of several nanometers. In particular, the void may have a pore size of about 90% to about 95% of that of a nanopore. The void may have a pore diameter of less than 10nm, especially from 2nm to 8nm.

The hollow capsule structure may be made of from the group consisting of carbon, a polymer material, and an inorganic oxide. In some embodiments the polymer material is obtained by polymerization of a monomer selected from the group consisting of divinylbezene, acrylonitrile, vinyl chloride, vinylacetate, styrene, (meth)acrylate, alkyl(meth)acrylate, ethyleneglycol dialkyl(meth)acrylate, urea, melamine, CR1R2=CR3R4 (wherein R1 to R4 are the same or independently selected from the group consisting of hydrogen, an alkyl, and an aryl, and the alkyl is a C1 to C6 alkyl and the aryl is a C6 to C12 aryl), phenol-formaldehyde, phenol, furfuryl alcohol, resorcinol-formaldehyde (RF), aldehyde, sucrose, glucose, xylose, and combinations thereof. In some embodiments the polymer material is a conductive polymer selected from the group consisting of polyaniline, polypyrrol, polyacetylene, polyacene, polythiophene, polyalkylthiophene, poly(p-phenylene), polyphenylene, polyphenylene sulfide, polyphenylenevinylene, polyfuran, polyacetylene, polyselenophene, polyisothianaphthene, polythiophenevinylene, polyperinaphthalene, polyanthracene, polynaphthalene, polyazulene, and copolymers thereof. The inorganic metal oxide may be an oxide selected from the group consisting of Al, Zr, Ti, Sn, and combinations thereof.

The hollow capsule structure can be applied to a catalyst supporter, a supporter for forming carbon nanotubes, an active material, a conductive agent, a separator, a deodorizer, a purifier, an absorption agent, a material for forming a display emitter layer and a filter.

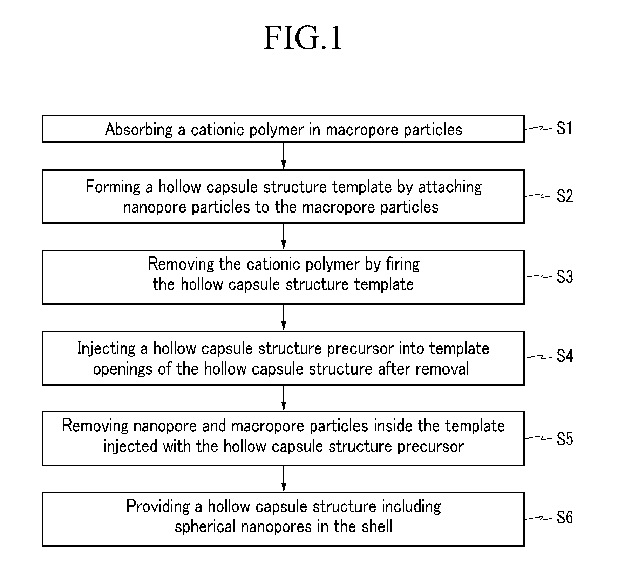

FIG. 1 is a flowchart showing a method of preparing a hollow capsule structure according to an embodiment of the present invention.

Referring to FIG. 1, the hollow capsule structure is prepared by: absorbing a cationic polymer in macro-sized particles (S1); forming a hollow capsule structure template by attaching nano-sized particles to the macro-sized particles (S2); removing the cationic polymer by firing the hollow capsule structure template (S3); injecting a hollow capsule structure precursor into template openings of the hollow capsule structure after the removal (S4); removing nano-sized and macro-sized particles inside the template injected with the hollow capsule structure precursor (S5); and providing a hollow capsule structure including spherical nanopores in the shell (S6). Hereinafter, each step will be more specifically explained.

First, a cationic polymer is absorbed in macro-sized particles (S1). The macro-sized particles include any material with no limit as long as it can be removed through etching with an acid or base. The material that can be removed with an acid or base may include an inorganic oxide including an element selected from the group consisting of Si, Al, Zr, Ti, Sn, and combinations thereof; and a spherical metal such as copper, silver, gold, and combinations thereof. Preferably, the macro-sized particles are made of SiO₂. The material should preferably be able to provide negative charges on the surface of the macro-cyclic particles.

The shape of the macro-sized particles corresponds to the hollow space in the final hollow capsule structure and can have various sizes depending on the hollow space size desired. In particular, the macro-sized particles may have a size ranging from 100nm to 5µm. Preferably, they may have a size ranging from 300nm to 2µm. When macro-sized particles have the above size, the finally-prepared hollow capsule structure can have a hollow space with a large surface area per unit weight and through which it can easily perform mass transfer.

The cationic polymer may be obtained from a monomer selected from the group consisting of diallyldialkylammonium halide, acryloxy alkylammonium halide, methacryloxyalkylammonium halide, vinylaryl alkylammonium halide, 3-acrylamido-3-alkyl ammonium halide, and mixtures thereof. In particular, the cationic polymer may be obtained from a monomer selected from the group consisting of diallyldimethylammonium halide, acryloxyethyl trimethylammonium chloride, methacryloxyethyltrimethylammonium chloride, vinylbenzyltrimethylammonium chloride, 3-acrylamido-3-methylbutyl trimethylammonium chloride, and mixtures thereof. Cationic polymer means, that the polymer includes functionalities which are positive charged, e.g. an ammonium group. The absorbing the cationic polymer surface treats macro-sized particles so that the macro-sized particles have a positive (+) charge on the surface thereof, and thereby nano-sized particles can be easily attached thereon.

The absorption of the cationic polymer in macro-sized particles includes common surface treatment techniques. Surface treatment includes coating, impregnation, and the like. The impregnation method is preferred. The impregnation method can be performed for coating by dipping macro-sized particles in an aqueous solution or an organic solution of the cationic polymer. Macro-particles having a negative charged surface are dipped in the cationic polymer solution. After absorption of the cationic polymer the surface of the treated macro-sized particle is positively charged, so that the treated macro material can easily absorb a negative charged nano-material.

Next, a hollow capsule structure template is formed by attaching nano-sized particles to the treated macro-sized particles having an outer surface build by the absorbed cationic polymer (S2). The nano-sized particles include any material that can be removed through etching with an acid or base. Preferably, the nano-sized particles are made of the same material as the macro-sized particles, especially are both particles made of SiO₂. The shapes of the nano-sized particles correspond to the shapes of the nanopores in the shell of the finally-prepared hollow capsule structure and the nano-sized particles have a particle size (diameter) ranging from 5nm to 100nm, preferably 15 to 100nm, especially 20 to 100nm. When nano-sized particles have a diameter within the above range, they can form nanopores with a pore size within the same range in a hollow capsule structure. Accordingly, the structure has a large specific surface area and may not be clogged, and can easily transfer mass due to the capillary phenomenon.

The attachment method of nano-sized particles to the macro-sized particles surface-treated with the cationic polymer may be based on a self-assembling process. For example, macro-sized particles surface-treated with a cationic polymer are centrifuged to remove a dispersion medium and gain the treated macro-sized particles. Then, the macro-sized particles are dispersed in a dispersion medium, and nano-sized particles are added thereto. The resulting product is sufficiently agitated, and then centrifuged. The acquired particles are dried. Herein, it can be also additionally treated with ultrasonic waves for uniform mixture.

The absorption of the cationic polymer in macro-sized particles (S1) and the attachment of nano-sized particles (S2) may be repeated several times to form a plurality of nano-sized particle layers.

Then, the hollow capsule structure template is fired (heat-treated) to remove the cationic polymer (S3). The firing is preferably performed at a temperature ranging from 450°C to 700°C, especially 550°C to 600°C. When the firing is performed within the above temperature range, the cationic polymer can be efficiently removed in a short time. When the cationic polymer is not removed but remains at least in parts, it can work as impurities and thereby transform the terminal on the surface of carbon. In addition, in some embodiments the firing is preferably performed under an inert gas atmosphere such as with nitrogen, argon, and the like. After the heat-treatment the nano-sized particles still remain on the surface of the macro-sized particles.

Next, a precursor, especially carbon precursor is injected into openings of the hollow capsule structure template, after the cationic polymer is removed (S4). In other words, the (carbon) precursor is absorbed on the porous surface of the intermediate of step (S3). The precursor may be therefore preferably provided as a liquid or as a vapor. The liquid approach includes a sedimentation method, a centrifugation method, a filtration method, and the like. In particular, a template can be dipped in a liquid precursor solution. When the precursor is a liquid, a template is directly dipped therein. When it is a solid, it may need a solvent such as quinoline, toluene, alcohols, ketones, and combinations thereof. In addition, the vapor approach may be performed under vacuum or by firing in a reflux system. In particular, a solid-phased precursor material may be heated to achieve a vapor.

The carbon precursor may be every material capable of forming carbon on the surface of the template. In particular, the carbon precursor may be an organic material which is transmitted into carbon by heat-treatment or a catalyst which promotes a carbon deposition on the surface of the template. The carbon precursor may be an organic polymer or metal catalyst. The carbon precursor includes preferably coal tar pitch, petroleum pitch or mixtures thereof. The carbonization of an organic carbon precursor being absorbed at the surface of the template may be performed at a temperature ranging from 700°C to 3000°C for 3 hours to 20 hours, preferably at a temperature ranging from 800°C to 1500°C for 5 hours to 15 hours. Within the temperature and time range, the final carbon material having the hollow capsule structure has increased electronic conductivity and carbon properties.

A polymer carbon precursor is an organic polymeric material capable of forming graphite-like carbon through a carbonization reaction. Examples of the polymer carbon precursor include polymers made by polymerization of one selected from the group consisting of divinylbenzene, acrylonitrile, vinyl chloride, vinyl acetate, styrene, (meth)acrylate, alkyl(meth)acrylate, ethyleneglycol dialkyl(meth)acrylate, urea, melamine, CR1R2=CR3R4 (wherein R1 to R4 are the same or independently selected from the group consisting of hydrogen, an alkyl, and an aryl, the alkyl is a C1 to C6 alkyl, and the aryl is a C6 to C12 aryl), phenol-formaldehyde, phenol, furfuryl alcohol, resorcinol-formaldehyde (RF), aldehyde, sucrose, glucose and xylose. In some embodiments the monomers for forming the polymer carbon precursor are adsorbed by the template and polymerized afterwards.

When monomers are selected from the group consisting of phenol-formaldehyde, phenol, furfuryl alcohol, resorcinol-formaldehyde (RF), aldehyde, sucrose, glucose, xylose, and combinations thereof, a polymerization initiator such as an acid catalyst may be further used. The acid catalyst may be selected from the group consisting of sulfuric acid, hydrochloric acid and nitric acid.

The monomer is mixed with the initiator in a mole ratio ranging from 15:1 to 35:1, preferably in a mole ratio ranging from 20:1 to 25:1. Within the above range, a polymerization reaction proceeds in a mild condition, acquiring a product with high purity.

The polymerization can be performed with heat-treatment at a temperature ranging from 60°C to 90°C for 3 hours to 30 hours. The polymerization within the above temperature and time can increase a yield rate and purity of a product.

A carbonization may be performed at a temperature ranging from 700°C to 3000°C for 3 hours to 20 hours, preferably at a temperature ranging from 800°C to 1500°C for 5 hours to 15 hours. Within the temperature and time range, the final carbon material having the desired hollow capsule structure has increased electronic conductivity and carbon properties. In addition, the temperature during the carbonization is increased at a speed of 1°C/min to 20°C/min, preferably 1°C/min to 10°C/min. When heated within the temperature increase range, the yield rate and purity of carbon is increased.

In some embodiments the inorganic metal precursor includes a metal selected from the group consisting of Al, Zr, Ti, Sn, and combinations thereof. In some embodiments the inorganic metal precursor includes a halide such as TiCl₂, an oxide, and the like.

Then, the macro-sized and nano-sized particles are removed from the hollow capsule structure template (S5), thereby preparing a (carbon) material having a hollow capsule structure including spherical nanopores in the shell (S6). The nano-sized or macro-sized particles are removed by etching with a material that can dissolve the nano-sized or macro-sized particles. The etching method is preferably performed with a material including an etchant selected from the group consisting of HF, NaOH, KOH, and combinations thereof.

After removal of the nano-sized and macro-sized particles, graphitization may be optionally performed. The graphitization may be performed at a temperature ranging from 2300°C to 3000°C, especially at a temperature ranging from 2300°C to 2600°C. The graphitization may increase the carbon properties and improve electronic conductivity and performance as a carbon structure, and can thereby be applied in various ways.

In other words, the present invention provides among others a method of preparing a porous carbon material having a hollow capsule structure comprising a shell, which has nanopores therein and encircles a central hollow space. The method comprises the steps of:
a) providing macro-sized particles having a diameter corresponding to a diameter of the hollow space to be achieved;
b) absorbing a cationic polymer in the macro-sized particles;
c) providing nano-sized particles having a diameter corresponding to a diameter of the nanopores to be achieved;
d) mixing the nano-sized particles with the treated macro-sized particles of step b) and thereby attaching a plurality of nano-sized particles on the surface of the treated macro-sized particles;
e) optionally, repeating steps b) through d) one or more times to produce a multi-layered structure of attached nano-sized particles;
f) removing the cationic polymer from the intermediate provided by steps d) or e) by heat-treatment;
g) absorbing a carbon precursor material on the surface of the intermediate of step f);
h) carbonizing the carbon precursor material by heat-treatment or performing a carbon deposition induced by the carbon precursor; and
i) dissolving the macro-sized and nano-sized particles by use of an etchant.

The method of preparing a hollow capsule structure allows to regulate the nanopore size and thickness of shells, and thereby the surface area. As a result, the hollow capsule structure has excellent electronic conductivity and a large specific surface area. The hollow capsule structure is configured to easily perform mass transfer due to the capillary phenomenon between the macro-sized hollow space in its center and nanopores in the shell. Therefore, the hollow capsule structure can be variously applied to as a catalyst supporter for a fuel cell, a supporter for growing carbon nanotubes, an active material for a lithium secondary battery, a conductive agent, a separator, a deodorizer, a purifier, an adsorption agent, a material for a display emitter layer, a filter, and the like.

According to another aspect, a fuel cell catalyst includes a carbon material obtained by or obtainable as described above with the mentioned hollow capsule structure. The fuel cell catalyst includes an active material supported by the hollow capsule structure.

The active material may include any catalyst that can perform a fuel cell reaction, such as a platinum-based catalyst. The platinum-based catalyst may include at least one selected from the group consisting of platinum, ruthenium, osmium, platinum-ruthenium alloys, platinum-osmium alloys, platinum-palladium alloys and platinum-M alloys (where M is a transition element selected from the group consisting of Ga, Ti, V, Cr, Mn, Fe, Co, Ni, Cu, Zn, Sn, Mo, W, Rh and Ru). More specifically, examples of the platinum-based catalyst may be selected from the group consisting of Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and mixtures thereof.

According to another aspect, a membrane-electrode assembly includes an anode, a cathode, and a polymer electrolyte membrane interposed between the cathode and the anode. At least one of the anode and cathode includes the above described fuel cell catalyst. In some embodiments the cathode and anode include an electrode substrate and a catalyst layer. The catalyst layer includes the catalyst described above.

The catalyst layer may further include a binder resin to improve its adherence and proton transfer properties. The binder resin may be a proton conductive polymer resin having a cation exchange group selected from the group consisting of a sulfonic acid group, a carboxylic acid group, a phosphoric acid group, a phosphonic acid group, and derivatives thereof at its side chain. Examples of the polymer include at least one proton conductive polymer selected from the group consisting of perfluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers and polyphenylquinoxaline-based polymers. The proton conductive polymer may be at least one selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole) and poly (2,5-benzimidazole).

The binder resins may be used singularly or in combination. In some embodiments the binder resins are used along with non-conductive polymers to improve adherence with the polymer electrolyte membrane. The binder resins may be used in a controlled amount according to their purposes.

Examples of the non-conductive polymers include polytetrafluoroethylene (PTFE), tetrafluoroethylene-hexafluoropropylene copolymers (FEP), tetrafluoroethylene-perfluoro alkyl vinylether copolymers (PFA), ethylene/tetrafluoroethylene (ETFE), chlorotrifluoroethylene-ethylene copolymers (ECTFE), polyvinylidenefluoride, polyvinylidenefluoride-hexafluoropropylene copolymers (PVdF-HFP), dodecylbenzenesulfonic acid, sorbitol and combinations thereof.

The electrode substrate is configured to support catalyst layers of the membrane-electrode assembly and provide a path for transferring the fuel and the oxidant to catalyst layers in a diffusion manner. The electrode substrate comprises a conductive substrate formed from a material such as carbon paper, carbon cloth, carbon felt, or a metal cloth (a porous film composed of a metal fiber or a metal film disposed on a surface of a cloth composed of polymer fibers).

The electrode substrate may be treated with a fluorine-based resin to be water-repellent, which can prevent deterioration of reactant diffusion efficiency due to water generated during a fuel cell operation. The fluorine-based resin may be polyvinylidene fluoride, polytetrafluoroethylene, fluorinated ethylene propylene, polychlorotrifluoro ethylene or copolymers thereof.

In addition, a microporous layer (MPL) may be added between the aforementioned electrode substrates to increase reactant diffusion effects. The microporous layer may include conductive powders with a particular particle diameter. The conductive material may include carbon powder, carbon black, acetylene black, activated carbon, carbon fiber, fullerene, nano-carbon or combinations thereof. The nano-carbon includes a material such as carbon nanotubes, carbon nanofiber, carbon nanowire, carbon nanohorns, carbon nanorings or combinations thereof. The microporous layer is formed by coating a composition including a conductive powder, a binder, and a solvent on the electrode substrate. The binder may include polytetrafluoroethylene, polyvinylidenefluoride, polyvinylalcohol, celluloseacetate, and so on. The solvent may be an alcohol such as ethanol, isopropyl alcohol, n-propyl alcohol, butanol, and so on, water, dimethyl acetamide, dimethyl sulfoxide, and N-methylpyrrolidone. The coating method may be screen printing, spray coating, doctor blade methods, gravure coating, dip coating, silk screening, painting, and so on, depending on the viscosity of the composition.

In some embodiments the polymer electrolyte membrane comprises a proton conductive polymer for transferring protons from an anode to a cathode. The proton conductive polymer comprises a polymer resin having a cation exchange group selected from the group consisting of a sulfonic acid group, a carboxylic acid group, a phosphoric acid group, a phosphonic acid group and derivatives thereof, at its side chain.

Examples of the polymer resin include at least one selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers and polyphenylquinoxaline-based polymers. The proton conductive polymer is preferably at least one selected from the group consisting of poly(perfluorosulfonic acid) (NAFIONTM), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly(2,5-benzimidazole).

The hydrogen (H) in the proton conductive group of the proton conductive polymer can be substituted with Na, K, Li, Cs, or tetrabutylammonium. When the H in the ionic exchange group of the terminal end of the proton conductive polymer side is substituted with Na or tetrabutylammonium, NaOH or tetrabutylammonium hydroxide may be used, respectively. When the H is substituted with K, Li, or Cs, suitable compounds for the substitutions may be used. Since such a substitution is known to this art, a detailed description thereof is omitted.

The following examples illustrate various embodiments of the present disclosure in more detail.

### Example 1

700ml of an aqueous dispersion solution in which SiO₂ particles with an average particle diameter of 500nm were dispersed was surface-treated with polydiallyldimethylammonium chloride as a cationic polymer. Then, it was mixed with 12ml of a colloidal dispersion solution including SiO₂ with an average particle diameter of about 20nm in a concentration of 40% to prepare a SiO₂ hollow nano-capsule structure template on the surface of the cationic polymer. The template was heat-treated at a temperature of about 550°C for 5 hours to remove the cationic polymer.

Then, 4ml of divinyl benzene was mixed with 0.1845g of azobisisobutyronitrile to prepare a polymer precursor solution. The polymer precursor solution was mixed with 2g of the template, so that the polymer precursor solution could fill the openings among the SiO₂ particles before polymerization of the polymer. After polymerization, the polymerized polymer was carbonized at 1000°C for 7 hours under argon gas. The carbide was added to 100ml of a HF solution to dissolve the remaining cationic polymer and SiO₂ to prepare a nano-capsule structure including a hollow space and a shell including nanopores with an average particle diameter of about 20nm.

### Example 2

700ml of an aqueous dispersion in which SiO₂ particles with an average particle diameter of 500nm were dispersed was surface-treated with polydiallyldimethylammonium chloride as a cationic polymer. Then, it was mixed with 12ml of a colloidal dispersion including SiO₂ with an average particle diameter of about 20nm in a concentration of 40% to attach SiO₂ on the surface of the cationic polymer. The attachment process was repeated twice, preparing a hollow nano-capsule structure template including a double-layered shell. The template was heat-treated at 550°C in a pipeline for 5 hours to remove the cationic polymer.

Next, 0.1845g of azobisisobutyronitrile was mixed with 4ml of divinyl benzene to prepare a polymer precursor solution. Then, 2g of the template was put into the polymer precursor solution, so that the polymer precursor solution could fill openings among the SiO₂ particles through polymerization. The obtained polymer was heated for carbonization at 1000°C under argon gas for 7 hours. The prepared carbide template was put in 100ml of a HF solution to dissolve the remaining cationic polymer and SiO₂, preparing a carbon material having a hollow nano-capsule structure including a central hollow macropore with an average particle diameter of 500nm and a shell including nanopores with an average particle diameter of about 20nm.

### Example 3

700ml of an aqueous dispersion solution in which SiO₂ particles with an average particle diameter of 500nm were dispersed was surface-treated with polydiallyldimethylammonium chloride as a cationic polymer. The resulting product was mixed with 12ml of a colloidal dispersion solution including SiO₂ with an average particle diameter of about 20nm in a concentration of 40% to attach SiO₂ on the surface of the cationic polymer. The attachment process was repeated three times, preparing a hollow nano-capsule structure template including a three-layered shell. The template was heat-treated at about 550°C in a pipeline for 5 hours to remove the cationic polymer.

Next, 0.1845g of azobisisobutyronitrile was mixed with 4ml of divinyl benzene to prepare a polymer precursor solution. The polymer precursor solution was mixed with 2g of the template, so that the polymer precursor solution could fill openings among SiO₂ particles through polymerization. Then, the polymerized polymer was heated for carbonization at 1000°C under argon gas for 7 hours. The carbide was put into 100ml of a HF solution to dissolve the remaining cationic polymer and SiO₂ to prepare a hollow nano-capsule structure including hollow macropores with an average particle diameter of 500nm and a shell including nanopores with an average particle diameter of about 20nm.

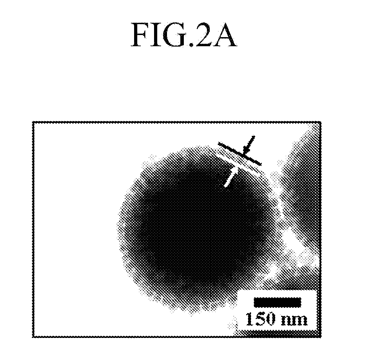

The hollow nano-capsule structure templates prepared by attaching nano-sized silica particles to macro-sized silica particles according to Examples 1 to 3 were examined with a scanning electronic microscope. The results are shown in FIGS. 2A to 2C.

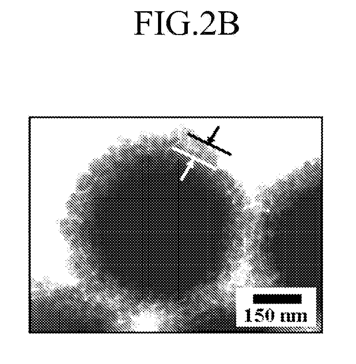

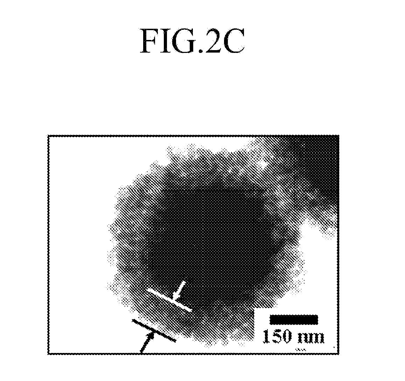

FIG. 2A shows a photograph of a hollow nano-capsule structure template including macro-sized silica and one nano-sized silica layer formed thereon according to Example 1. FIG. 2B shows a photograph of a hollow nano-capsule structure template including two nano-silica layers according to Example 2. FIG. 2C is a photograph of a hollow nano-capsule structure template including three nano-sized silica layers according to Example 3.

As shown in FIGS. 2A to 2C, nano-sized silica layers were formed in plural on the surface of macro-sized silica.

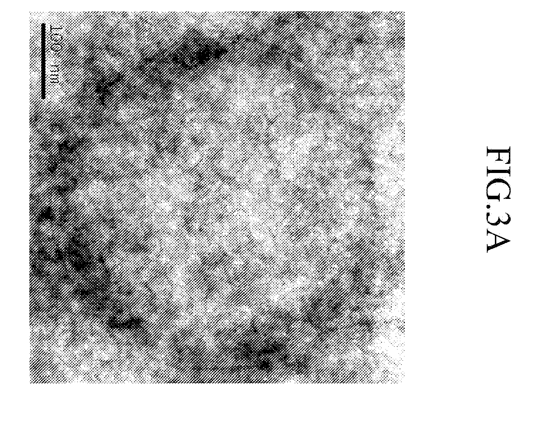

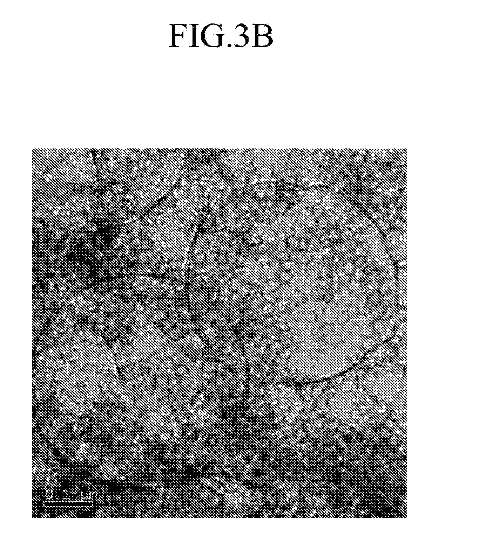

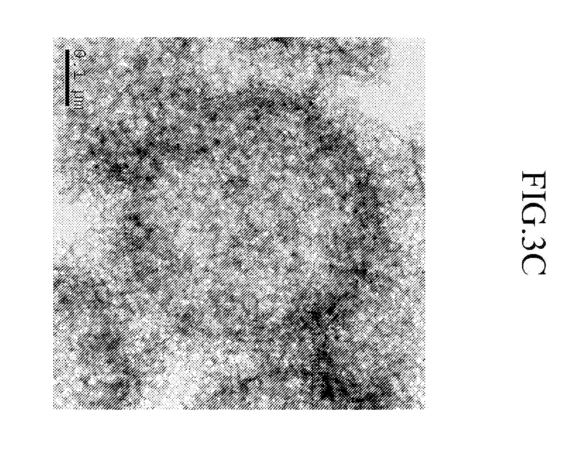

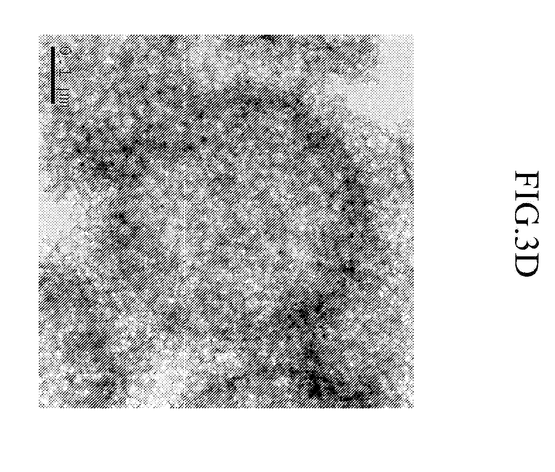

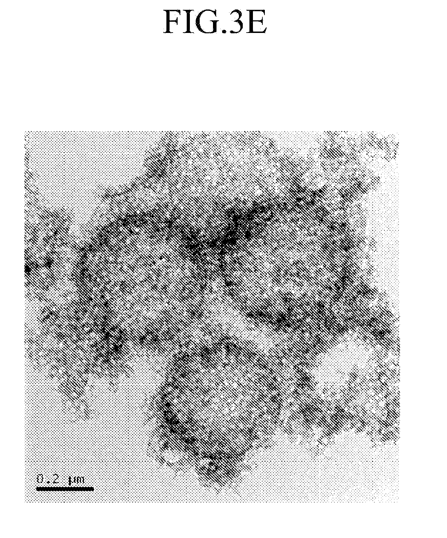

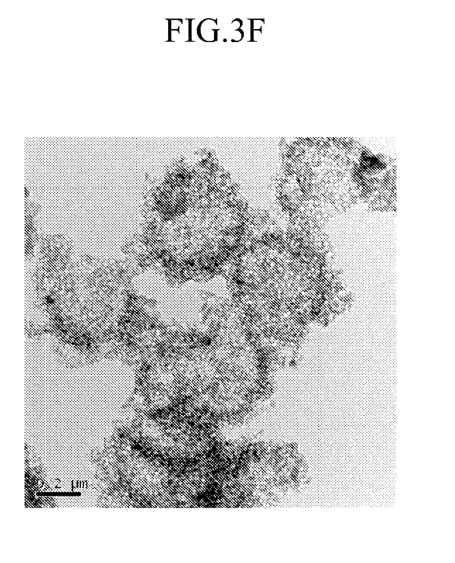

The hollow capsule structure of Example 3 was examined with a transmission electron microscope (TEM). The results are shown in FIGS. 3A to 3F.

As shown in FIGS. 3A to 3F, the hollow capsule structure included a macro-sized hollow space (or macropore) in the center and a shell surrounding the hollow space and including uniformly-sized nanopores.

### Example 4

A hollow capsule structure template was prepared according to the same method as in Example 3 except for surface-treating 700ml of a dispersion solution in which SiO₂ particles with an average particle diameter of 300nm were dispersed, with polydiallydimethylammonium chloride as a cationic polymer, and then mixing the resulting product with 12ml of a colloidal dispersion of SiO₂ with an average particle diameter of about 20nm in a concentration of 40% to attach SiO₂ on the surface of the cationic polymer particles.

### Comparative Example 1

4.72mmol of octadecyltrimethoxysilane (C18-TMS) was mixed with 4.7 mmol of tetraethylorthosilicate (TEOS). The mixture was added to a dispersion solution in which 1.5g of spherical silica particles with a diameter of about 133nm were dispersed. The resulting product was heat-treated at about 550°C in a pipeline for 5 hours to remove the C18-TMS, synthesizing a hollow silica template particle with a 3.8nm mesoporous shell.

The hollow silica particle was used as a mold. Then, divinyl benzene as a polymer precursor was mixed with an azobisisobutyronitrile radical initiator. The mixture was injected into the mold and then polymerized at 70°C for one day, preparing a divinyl benzene polymer-silica composite material. Herein, the mole ratio of the polymer monomer and the radical initiator was 25:1. In addition, a part of the divinyl benzene polymer-silica composite was heated for carbonization at 1000°C under a nitrogen atmosphere for 7 hours, preparing a carbon-silica composite. Then, a HF aqueous solution was added to the carbon-silica composite to remove the silica mold and to separate a porous polymer and a carbon capsule. Then, the porous polymer and carbon capsule was dried.

Upon close examination of the carbon capsule, the carbon capsule was found to include a 440nm macropore in the center and 4.8nm mesopores in the shell. In addition, the mesopores were irregularly distributed in the carbon capsule.

### Example 5: Preparation of a Catalyst

0.9544g of H₂PtC₁₆ was dissolved in 80ml of distilled water, preparing a metallic salt solution. Then, the metallic salt solution was added to a dispersion solution prepared by dispersing 0.1481g of the hollow capsule structure of Example 3 as a catalyst supporter in 150ml of distilled water. The mixed solution was diluted until a metallic salt having a 2mM concentration in the entire solution was obtained. The solution was regulated to have pH of about 8.5 by using 20wt% NaOH. Then, 40ml of an aqueous solution prepared by dissolving 1.6g of NaBH₄ as a reducing agent was added to the mixed solution for precipitation. When the mixed solution became clear on top, it was filtered several times with a 0.2µm nylon filter. The filtered product was washed several times with distilled water and then dried at 80°C, preparing a Pt catalyst supported on a supporter. Herein, the Pt was supported in an amount of 60wt% based on the entire weight of the catalyst.

### Example 6: Preparation of a Catalyst

A Pt catalyst was prepared according to the same method as in Example 5 except for using a hollow capsule structure as a catalyst supporter according to Example 4.

### Comparative Example 2: Preparation of a Catalyst

A Pt catalyst was prepared according to the same method as in Example 5 except for using a carbon capsule as a catalyst supporter according to Comparative Example 1.

### Example 7: Preparation of a membrane-electrode assembly for a fuel cell

A Pt-Ru/C catalyst was prepared by supporting the hollow capsule structure in 2mg/cm² of Pt-Ru black (Johnson Matthey Co.) according to Example 3. The Pt-Ru/C catalyst was mixed with distilled water, isopropylalcohol, and 5 wt% of a Nafion ionomer solution (Aldrich Co.) in a weight ratio of 1:1:10:1, preparing a composition for an anode catalyst layer. In addition, a Pt/C catalyst was prepared by supporting 2mg/cm² of Pt black (Johnson Matthey Co.) in a hollow capsule structure according to Example 3. The Pt/C catalyst was mixed with distilled water, isopropylalcohol, and 5 wt% of a Nafion ionomer solution (Aldrich Co.) in a weight ratio of 1:1:10:1, preparing a composition for a cathode catalyst.

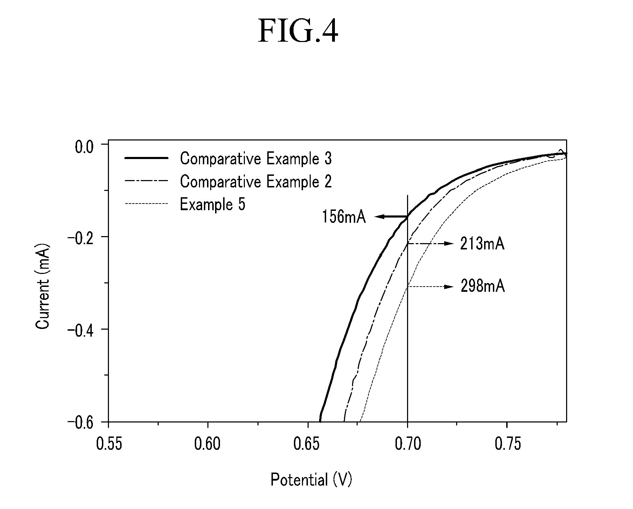

The compositions for anode/cathode catalyst layers were respectively coated on carbon papers treated with TEFLON (tetrafluoroethylene), preparing an anode and a cathode for a fuel cell. Next, a polymer electrolyte membrane (Nafion 115 Membrane, Dupont) was positioned between the anode and the cathode to prepare a membrane-electrode assembly for a fuel cell. Then, the Pt-Ru alloy catalysts according to Example 5 and Comparative Example 2 were evaluated regarding catalyst activity. The catalyst activity evaluation was performed by using a half-cell test. In addition, a commercial catalyst, Pt black (Johnson Matthey Co.) catalyst, was used as in Comparative Example 3 to evaluate catalyst efficiency. The result is shown in FIG. 4.

On the other hand, a reaction cell was prepared to include Ag/AgCl as a reference electrode, an electrode prepared by respectively coating the catalysts of Example 5 and Comparative Examples 2 and 3 on a carbon paper (1.5cm x 1.5cm) in a loading amount of 2mg/cm² as a working electrode, a platinum electrode (Pt gauze, 100 mesh, Aldrich) as a counter-electrode, and a 0.5M sulfuric acid solution as an electrolyte.

The reaction cell was measured regarding current characteristic as a base, changing a potential at a scan rate of 20mV/s within a range of 350mV to 1350mV. In addition, the reaction cell was provided with 1.0M of a methanol solution to measure the current characteristic, changing its potential within a range of 350mV to 1350mV at a scan speed of 20mV/s. The electrodes of Example 5 and Comparative Examples 2 and 3 were used as a working electrode. The results are shown in FIG. 4.

As shown in FIG. 4, a Pt catalyst of Example 5, including a hollow capsule structure as a catalyst supporter, respectively had 91% and 40% improved catalyst activity than a commercial Pt black catalyst of Comparative Example 3 and a Pt catalyst of Comparative Example 2 including a carbon capsule catalyst as a supporter. The reason that the hollow capsule structure of Example 3 had more improved catalyst activity than a carbon capsule catalyst supporter of Comparative Example 1 is that the hollow capsule structure of Example 3 not only includes spherical nano-sizeds with a size of 5nm to 100nm but can also easily transfer mass due to the capillary phenomenon according to networks among the pores. On the other hand, the carbon capsule of Comparative Example 1 had too-small meso-pores with a size ranging from 2nm to 5nm and could not easily transfer mass due to channels of the capsule structure itself.

## Claims

1. A porous material having a hollow capsule structure comprising a shell, which has nanopores therein and encircles a central hollow space.

2. The porous material of claim 1, wherein the nanopores and the central hollow space are of spherical shape.

3. The porous material of claim 1 or 2, wherein a nanopore diameter ranges from 5nm to 100nm.

4. The porous material of claim 3, wherein the hollow space within the hollow capsule structure has a diameter ranging from 100nm to 5µm and a ratio of the nanopore diameter and the hollow space diameter is from 1:1 to 1:200.

5. The porous material of any of the preceding claims, wherein the shell has a multi-layered structure.

6. The porous material of any of the preceding claims, wherein a specific surface area of the porous material is ranging from 500m²/g to 2000m²/g.

7. The porous material of any of the preceding claims, wherein the nanopores within the hollow capsule structure have a single pore size.

8. The porous material of any of the preceding claims, wherein the porous material comprises at least one material selected from the group consisting of carbon, a polymer and an inorganic metal oxide.

9. The porous material of claim 8, wherein the porous material is a porous carbon material.

10. A method of preparing a porous material having a hollow capsule structure comprising a shell, which has nanopores therein and encircles a central hollow space, the method comprising the steps of:
a) providing macro-sized particles having a diameter corresponding to a diameter of the hollow space to be achieved;
b) absorbing a cationic polymer in the macro-sized particles;
c) providing nano-sized particles having a diameter corresponding to a diameter of the nanopores to be achieved;
d) mixing the nano-sized particles with the treated macro-sized particles of step b) and thereby attaching a plurality of nano-sized particles on the surface of the treated macro-sized particles;
e) optionally, repeating steps b) through d) one or more times to produce a multi-layered structure of attached nano-sized particles;
f) removing the cationic polymer from the intermediate provided by steps d) or e) by heat-treatment; and
g) absorbing a precursor material on the surface of the intermediate of step f).

11. The method of claim 10, wherein the macro-sized and nano-sized particles are of spherical shape.

12. The method of claim 10 or 11, wherein a diameter of the nano-sized particles ranges from 5nm to 100nm.

13. The method of claim 12, wherein the macro-sized particles have a diameter ranging from 100nm to 5µm and a ratio of diameters of the nano-sized particles and the diameter of the macro-sized particles is from 1:3 to 1:100.

14. The method of any of claims 10 through 13, wherein the nano-sized particles have a single diameter.

15. The method of any of claims 10 through 14, wherein the macro-sized and nano-sized particles are made of an inorganic oxide.

16. The method of claim 15, wherein the macro-sized and nano-sized particles are made of SiO₂.

17. The method of any of claims 10 through 16, wherein the cationic polymer is one obtained by polymerization of one or more monomers selected from the group consisting of diallyldialkylammonium halide, acryloxy alkylammonium halide, methacryloxy alkylammonium halide, vinyl aryl alkylammonium halide and 3-acrylamido-3-alkyl ammonium halide.

18. The method of any of claims 10 through 17, wherein the heat-treatment of step f) is performed at a temperature ranging from 450 to 700°C.

19. The method of any of claims 10 through 18, wherein the porous material is a porous carbon material and the method further comprises the steps of:
g) absorbing a carbon precursor material on the surface of the intermediate of step f);
h) carbonizing the carbon precursor material by heat-treatment or performing a carbon deposition induced by the carbon precursor; and
i) dissolving the macro-sized and nano-sized particles by use of an etchant.

20. The method of any of claim 19, wherein step i) of dissolving the macro-sized and nano-sized particles is performed by etching with HF as an etchant.

21. The method of any of claims 19 or 20, wherein the carbon precursor material, is coal tar pitch, petroleum pitch or an organic polymer capable of forming carbon through a carbonization reaction.

22. The method of any of claims 19 through 21, wherein step h) of carbonizing is performed at a temperature ranging from 700 to 3.000°C.

23. The method of any of claims 19 through 21, wherein the method further includes a step j) of graphitization of the treated material of step i) at a temperature ranging from 2.300 to 3.000°C.

24. A porous carbon material obtained or obtainable by the method of any of claims 19 through 23.

25. A fuel cell catalyst comprising:
a porous carbon material according to claim 9 or claim 24; and
an active material disposed on the porous carbon material.

26. A membrane-electrode assembly for a fuel cell comprising:
an anode;
a cathode;
a polymer electrolyte membrane positioned between the anode and the cathode, and
a fuel cell catalyst of claim 25 disposed within the anode and/or the cathode.

27. Use of a porous carbon material according to any of claims 1 through 9 and claim 24 as a catalyst supporter, a supporter for carbon nanotube growth, an active material, a conductive agent, a separator, a deodorizer, a purifier, an adsorption agent, a material for a display emitter layer, and a filter material.
